# EUROPEAN PATENT APPLICATION

(11) **EP 0 626 436 A1**
(43) Date of publication of application: **30.11.1994**
(21) Application number: 94107849.5
(22) Date of filing: 20.05.1994
(51) Int. Cl.: C09K 11/67, G21K 4/00

(54) **Tin activated hafnia phosphor composition and X-ray intensifying screen**

(30) Priority: 24.05.1993 US 67207
(71) Applicant: EASTMAN KODAK COMPANY, Rochester, New York 14650-2201 (US)
(72) Inventor: Bryan, Philip Steven, c/o Eastman Kodak Comp., Rochester, New York 14650-2201 (US); Lambert, Patrick Maddock, c/o Eastman Kodak Comp., Rochester, New York 14650-2201 (US); Jarrold, Gregory S., c/o Eastman Kodak Comp., Rochester, New York 14650-2201 (US); Towers, Christine May, c/o Eastman Kodak Comp., Rochester, New York 14650-2201 (US)
(74) Representative: Jones, Alan John

(57) **Abstract**

A phosphor composition which consists essentially of oxygen and a combination of elements satisfying the relationship:

[(Hf_{1-z}Zr_{z}):xSn yTi

wherein x is in the range of from 0.0002 to 0.05, y is in the range of from 0 to 0.005, and z is in the range of from 0 to 0.5.

The composition is used in an intensifying screen for producing a latent image in a silver halide radiographic element when imagewise exposed to X-radiation.

## Description

The present invention relates to phosphor compositions for use in X-ray intensifying screens, and X-ray intensifying screens which utilize these phosphors.

X-ray intensifying screens have in the past been used in combination with silver halide containing radiographic films to reduce the exposure of patients to X-rays. Intensifying screens typically consist of a support and a phosphor layer. The phosphor layer, which absorbs X-radiation more efficiently than the silver halide, is capable of emitting a longer wavelength radiation to the adjacent silver halide emulsion layer of the radiographic element in an image pattern corresponding to that of the X-radiation received.

The efficiency of absorption of the X-radiation by the phosphor is dictated to some extent by the density of the phosphor crystals. Higher density phosphor combinations absorb radiation more efficiently than lighter compositions. One very popular phosphor composition, gadolinium oxy sulfide (Gd₂O₂S), has a density of 7.3 g/cm³. It would be desirable to develop a variety of useful phosphor host compounds having higher densities, since theoretically, for such phosphors thinner intensifying screens could be employed, resulting in increased resolution.

Several such relatively high density luminescent compositions have been proposed. Titanium activated hafnium oxide, for example, which has a density of 9.7 g/cm³. Phosphor compositions of this type are described in US-A-4,988,880.

There is, however, a continuing need for alternative high density phosphor compositions, as many phosphors seem to suffer from one disadvantage or another. For example, because the emission of conventional Ti-activated HfO₂ is centered at about 475-480 nm, it is not well-matched to currently available blue or green-sensitive films. Consequently, in such cases, the silver halides, which normally possess native sensitivity to both the near ultraviolet and blue regions of the spectrum, must be sensitized to be sensitive to the green, red, and/or infrared portions of the electromagnetic spectrum.

There thus continues to be a need for economical phosphors exhibiting high density and luminescence intensity. Further, there is a continuing need for such phosphors which have peak emissions at wavelengths which differ from currently available phosphors, particularly compositions which have a peak emission at wavelengths which are substantially shorter than 480 nm.

Phosphors of the present invention consist essentially of oxygen and elements satisfying the relationship:

(Hf_{1-z}Zr_{z}):xSn yTi

wherein x is in the range of from 0.0002 to 0.075, y is in the range of from 0 to 0.005. By utilizing phosphors having a composition within these ranges, the prompt luminescent emission may be tailored to emit at virtually any wavelength between 410 and 480 nm.

Consequently, the phosphors of the present invention are capable of absorbing X-radiation and emitting longer wavelength electromagnetic radiation in the spectral region to which silver halides exhibit native sensitivity.

Consequently, these phosphors are useful in X-ray intensifying screens. Intensifying screens generally include a support and a layer comprising the above-described phosphor and an organic binder that is transparent to X-radiation and to radiation emitted when the phosphor is excited by X-radiation.

The tin activated hafnia compositions of the present invention which do not contain titanium provide dense (9.7 g/cm³) host phosphors whose emission band is centered in the blue region of the spectrum (that is, 410-415 nm). Emissions centered at such wavelengths are well-matched for use with commercially available bromo-iodide films. Low concentrations of titanium may be added to the tin activated HfO₂ to shift the blue (410-415) emission towards the green region (475 to 480 nm) of the spectrum. In fact, by manipulating the ratio of tin to titanium activator employed, the phosphor may be tailored to emit at any wavelength between 410 and 480 nm. In this way, the overlap between spectral sensitivity of the silver halide film and the emission wavelength of the phosphor can be maximized.

Figure 1 is a graph illustrating the prompt emission spectrum of X-ray excited non-activated hafnia.

Figure 2 is a graph illustrating the prompt emission spectrum of X-ray excited tin activated hafnia composition of the present invention.

In accordance with the present invention, a phosphor composition is provided which consists essentially of oxygen and elements satisfying the relationship:

(Hf_{1-z}Zr_{z}):xSn yTi (I)

wherein x is in the range of from 0.0002 to 0.075, y is in the range of from 0 to 0.005, z is in the range of from 0 to 0.5. By utilizing phosphors having a composition within these ranges, the prompt luminescent emission may be tailored to emit at virtually any wavelength between 410 and 480 nm.

The ratio of hafnium and zirconium can be widely varied, although it is preferred that the zirconium content be less than the hafnium content. While the purest obtainable forms of hafnia can be employed in the practice of this invention without intentionally incorporating zirconium, except as an impurity, it is not necessary to incur the significant expense of using high purity hafnia to realize the advantages of this invention. In other words in formula (I) above, a suitable range for z is from 1x10⁻⁵ to 0.5.

In the composition of the invention the ratio of hafnium to zirconium preferably satisfies the relationship:

Hf_{1-z}Zr_{z} (II)

where
z is in the range from zero to 0.5.

The hafnia phosphors of the present invention are those that satisfy the relationship :

D: xSn (III)

where
D is hafnium and/or zirconium as described above and x is in the range of from 0.0002 to 0.075. More preferably, x is in the range of from 0.0005 to 0.025, and most preferably x is in the range of from 0.0005 to 0.01. By incorporating tin as an activator for the hafnia/zirconia phosphors in this way, the wavelength of the prompt emission of these phosphors is shifted from the weak ultraviolet host emission to 410-415 nm.

These phosphors are consequently very useful in many X-ray intensifying screens which utilize particular silver halides, since many silver halides exhibit native sensitivity to both the near ultraviolet (300 to 400 nm) and blue (400 to 450 nm) regions of the spectrum.

In a preferred embodiment of the invention, the hafnium zirconium oxide phosphor is activated by a small amount of titanium as well as tin. Preferably, the phosphors of the present invention which utilize titanium are those that satisfy the relationship :

D: xSn yTi (IV)

where
D is hafnium and/or zirconium as described above and x is tin in the ranges described above, and y is in the range of from 0 to 0.005. For example, y can = 0 or y can be in the range of from 1x10⁻⁵ to 0.005. More preferably, y is in the range of from 1x10⁻⁵ to 0.002, and most preferably y is in the range of from 1x10⁻⁵ to 0.001. By incorporating titanium as an activator in addition to the tin activator, the wavelength of the prompt emission of these phosphors can be shifted to longer wavelength.

The phosphors of the present invention can be employed to form intensifying screens. Intensifying screens typically comprise a support onto which is coated a phosphor layer containing the phosphor in particulate form and a binder for the phosphor particles. The tin-activated (and additionally titanium activated) hafnia zirconia phosphors can be used in the phosphor layer in any conventional particle size range and distribution. Generally, the use of smaller mean particle size phosphor crystals results in increased resolution. Preferred mean particle sizes are in the range of from 0.5 µm to 40 µm, and more preferably from 1 µm to 20 µm.

Intensifying screens of the present invention can absorb an imagewise pattern of X-radiation and emit a corresponding image pattern at wavelengths in the blue region of the spectrum. Consequently, the intensifying screens can be employed in combination with silver halide radiographic elements that have not been spectrally sensitized. However, the intensifying screens are not restricted to use with silver halide radiographic elements that are free of spectral sensitizing dye.

The method of making the phosphors of the present invention is not critical, and any of the methods and techniques commonly used to make phosphors are applicable.

In a preferred embodiment for preparing the phosphor composition of the present invention, commercially available sources of tin, zirconium, hafnium, and optionally titanium are intimately intermixed as solids or dissolved in a common solvent, followed by coprecipitation. The starting materials are chosen so that upon firing only the metal and oxygen atoms remain as residue, any other moieties of the compounds being thermally decomposed or otherwise driven off during firing.

A preferred tin starting material is tin oxalate (SnC₂O₄), while a preferred hafnium starting material is hafnium oxychloride 8-hydrate. Other representative and exemplary hafnium and zirconium starting materials and exemplary methods useful in the formation of the phosphor composition of the present invention (by substitution of appropriate starting materials) are disclosed in US-A-4,988,880; US-A-4,988,881; and US-A-5,017,791. The wavelength of the emission of the phosphors of the present invention may be altered, as discussed above, by blending a small amount of titanium activator with the tin activated phosphor host prior to firing. Such activation, as well as the tin activation, can be undertaken according to any conventional technique. Examples of useful techniques are disclosed in US-A-5,017,791; US-A-2,542,336; J.F. Sarver, "Preparation and Luminescent Properties of Ti-Activated Zirconia", 113 Journal of the Electrochemical Soc'y. 124-28 (Feb. 1966); and L.H. Brixner, Structural and Luminescent Properties of the Ln₂Hf₂O₇-Type Rare Earth Hafnates", 19 Mat. Res. Bull. 143-49 (1984).

Preferably, the phosphors of the present invention are prepared using techniques which utilize fluxing materials, which may be, for example, a lithium salt such as Li₂CO₃.

The phosphors of the present invention can be blended with other phosphors, if desired, to form an intensifying screen having optimal properties for a particular application. Intensifying screen constructions containing more than one phosphor-containing layer are also possible, with the present phosphors being present in one or more of the phosphor-containing layers.

Sufficient binder is present to give structural coherence to the phosphor-containing layer. The binders can be identical to those conventionally employed in fluorescent screens. Such binders are generally chosen from organic polymers which are transparent to X-radiation and emitted radiation, such as: sodium o-sulfobenzaldehyde acetal of poly(vinyl alcohol), chlorosulfonated poly(ethylene), a mixture of macromolecular bisphenol poly(carbonates) and copolymers comprising bisphenol carbonates and poly(alkylene oxides), aqueous ethanol soluble nylons, poly (alkyl acrylates and methacrylates) and copolymers of alkyl acrylates and methacrylates with acrylic and methacrylic acid, poly(vinyl butyryl) and poly(urethane) elastomers. These and other useful binders are disclosed in US-A-2,502,529; US-A-2,887,379; US-A-3,617,285; US-A-3,300,310; US-A-3,300,311; US-A-3,743,833; and in Research Disclosure, Vol. 154, February 1977, Item 15444, and Vol. 182, June 1979. Particularly preferred intensifying screen binders are poly(urethanes).

The support onto which the fluorescent layer is coated can be selected from those normally employed in radiographic intensifying screens. Examples of the support materials typically utilized in intensifying screens include plastic films of polymers such as cellulose acetate, for example, cellulose triacetate, polyesters such as poly(ethylene terephthlate), polyamide, polyimide, and polycarbonate; metal sheets such as aluminum foil and aluminum alloy foil; ordinary papers; baryta paper; resin-coated papers; papers containing pigments such as titanium dioxide or the like; and papers sized with poly(vinyl alcohol) or the like. Most commonly, the support is a polymeric film. For highest levels of image sharpness the support is black or is transparent and is mounted for exposure in a cassette with a black backing. For the highest attainable speeds a white support, such as a titania or barium sulfate loaded or coated support is employed. Specifically preferred reflective supports which offer a balance of speed and sharpness are those containing reflective microlenslets, such as are disclosed in US-A-4,912,333.

Any one or combination of conventional intensifying screen features, such as overcoats, subbing layers, and the like, compatible with the features described above can also be employed. Conventional radiographic element and intensifying screen constructions are disclosed in Research Disclosure, Vol. 184, Aug. 1979, Item 18431. Research Disclosure is published by Kenneth Mason Publications, Ltd., Emsworth, Hampshire P010 7DD, England.

The invention may be more easily comprehended by reference to the following specific examples. It must be understood, however, that these examples are provided for purposes of illustration and that the invention may be practiced otherwise than as specifically illustrated without departing from the spirit and scope of the invention. For example, the invention is not confined to the particular experimental conditions, reagents, or stoichiometries cited in the examples.

### EXAMPLES

### Method of Sample Evaluation

The relative luminescence response of the phosphor powder produced in each example was measured by packing phosphor powder into aluminum planchets (2 mm high x 24 mm diameter) at a coverage of 1 g/cm² and exposing the planchets to X-radiation from tungsten target X-ray source in a General Electric XRD 6™ generator. The X-ray tube was operated at 70 kVp and 10mA with a 1.00 mm Al and 0.5 mm Cu filtration. The luminescence response was obtained using an IP-28™ photomultiplier tube at 500 V bias. The voltage from the photomultiplier was measured with a Keithley™ high impedance electrometer (voltage is proportional to the total light output of the sample).

Emission spectra were obtained using an instrumental setup consisting of an Instruments S.A. Model HR 320™ grating spectrometer coupled with a Princeton Applied Research Model 1422/01™ intensified linear diode array detector. Data acquisition and processing was controlled by a Princeton Applied Research Model 1460 OMA III™ optical multichannel analyzer. The spectra were corrected to compensate for the spectral response of the detector-spectrograph combination. Samples were placed in planchets as described above and irradiated with X-rays from a tungsten-target, beryllium-window tube operated at 70kVp and 10 ma in a XRD 6™ generator. The X-rays used to obtain the emission spectron were not filtered.

The following examples detail the preferred tin concentration range in Hf₁₋ₓSnₓO₂ as prepared by non-flux (Ex. 1-7) and flux (8-14) routes.

Comparative Example 1 illustrates the preparation of non-activated HfO₂, which was then used as a standard in the following examples.

### Example 1

The hafnium source used was reactor grade special (R.G.S.) hafnium oxychloride 8-hydrate from Teledyne Wah Chang Albany (which contains 1.9 mole % Zr). Oxalic acid (Eastman Kodak Company reagent grade) and ammonium nitrate (Baker reagent grade) Ammonium oxalatohafnate dihydrate (NH₄)₂Hf(C₂O₄)₃·2H₂O, was prepared as described in Russ. J. Inorg. Chem. Vol. 8, pages 1171 et. seq. (1963) for the analogous ammonium oxalatozirconate dihydrate.

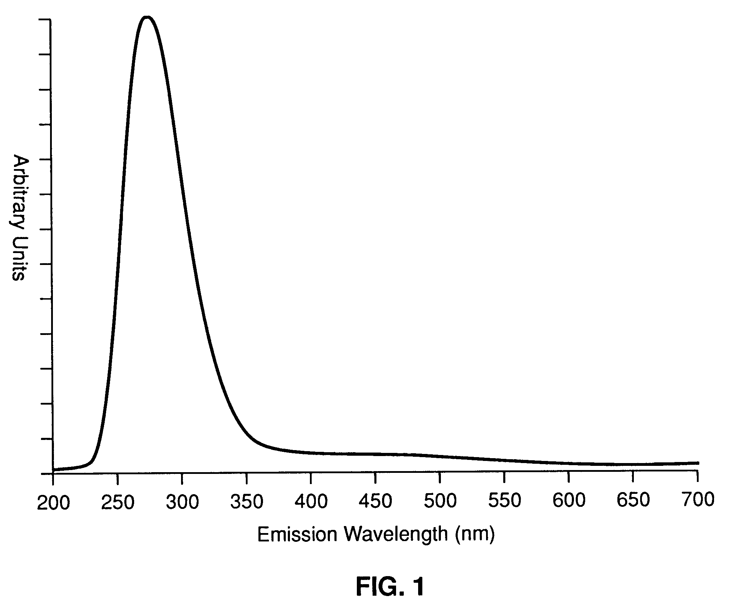

A 13.77 gram sample of the ammonium oxalatohafnate dihydrate was placed in a 50 ml alumina crucible, covered with an alumina lid and then fired to 1400øC in a high temperature box furnace for 6 hrs. Upon cooling, the sample was ground using an agate mortar and pestle. X-ray powder diffraction patterns of the fired sample exhibited only the monoclinic form of HfO₂. For purposes of comparison the luminescence response of this sample was assigned an arbitrary value of 100 for both relative luminescence response and integrated relative luminescence intensity. The emission, illustrated in Fig. 1, is about 55 nm wide at half-height and is centered at 275 nm.

### Examples 2-7

Examples 2 through 7 illustrate the effect of tin activation in Hf₁₋ₓSnₓO₂ as prepare using non-flux techniques The samples were prepared as described in Example 1, with the exception that 0.1 to 5.0 mole % of tin was added as SnC₂O₄.

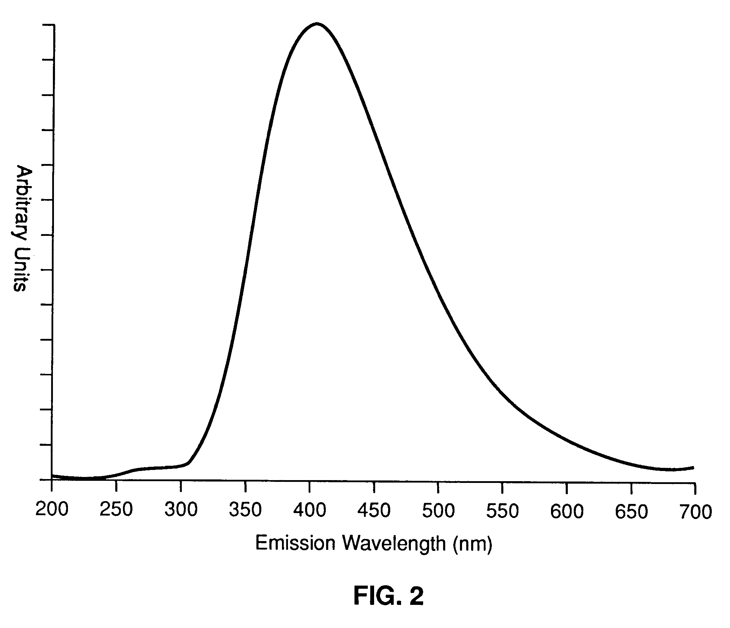

The SnC₂O₄ was prepared and added as follows: 948.0 g of SnCl₂ (Eastman Kodak Company, reagent grade) was dissolved in 1400 ml of distilled water, then added with vigorous stirring to a 70°C solution of 630.4 g of oxalic acid dihydrate (Eastman Kodak Company, reagent grade) in 3500 ml of distilled water. The precipitate was allowed to settle, and the supernatant aspirated off. The precipitate was washed with 5000 ml of distilled water and collected by vacuum filtration. The collected material was then dried for 5 hrs at 100øC. SnC₂O₄ was added as indicated in Table 1 and mixed with the (NH₄)₂Hf(C₂O₄)₃·2H₂O by hand grinding in a glass mortar and pestle, and then fired as described in Example 1. The emission spectra of the tin activated samples is characterized by a broad feature (130 nm at half-height) centered at about 412 nm (See, for example, Example 3, which is illustrated in Fig. 2). This demonstrates how the emission of the HfO₂ was shifted to the blue region of the visible spectrum by the addition of tin activator. The emission from the tin-activated material is well matched to the intrinsic absorption of unsensitized silver halide emulsions and is not significantly attenuated by screen binder absorption. The relative luminescence responses for Examples 1 through 7 are given in Table 1 below.

**Table 1**

| **Luminescence Response of Hf**_{**1-x**}**Sn**_{**x**}**O₂** | | |
|---|---|---|
| **Example** | **x value** | **Rel. Lum. Response** |
| 1 (control) | 0.0000 | 100 |
| 2 | 0.0010 | 402 |
| 3 | 0.0048 | 361 |
| 4 | 0.0099 | 302 |
| 5 | 0.0196 | 200 |
| 6 | 0.0291 | 179 |
| 7 | 0.0476 | 130 |

The above examples demonstrate how the relative luminescence intensity is increased by the incorporation of small amounts of tin activator in accordance with the present invention.

### Example 8

Example 8 contains no tin activator and serves as a control for flux-derived tin-activated HfO₂. The formulation includes addenda optimized for titanium-activated HfO₂.

The zirconium and hafnium oxychloride sources used in the following examples are R.G.S. variety obtained from Teledyne Wah Change Albany. A hydrous hafnia precursor (containing 1 mole % Zr) was prepared by the simultaneous addition of a hafnium and zirconium oxychloride solution (812.96 g HfOCl₂·8H₂O + 4.78 g of ZrOCl₂·8H₂O in 1940 ml of distilled water) and a sodium hydroxide solution (170.0 g Eastman Kodak Company ACS reagent grade in 1940 ml of distilled water) to 8000 ml of rapidly stirred distilled water. The resulting gelatinous material was collected by vacuum filtration and dried on a rotary evaporator at 100°C for 15 hours. The dried material was washed 3 times using 9.2 liters of distilled water each time and dried for 60 hours at 50°C. The material was then ball milled with 1/2 inch zirconia media for 3 hours.

6.3 g of the hydrous hafnia source were combined with 12 mole % Li₂CO₃ (0.235 g; Aldrich, 99.997%), 15 mole % K₂SO₄ (0.6928 g; Mallinckrodt, reagent grade), 1.5 mole % GeO₂ (0.0415 g; Alfa Ultrapure grade) and 0.0067 mole % In₂O₃. The mixture was ground with an agate mortar and pestle, placed in a 10 ml alumina crucible, covered with an alumina lid and fired in a tube furnace at 1000°C for 2.5 hrs. The ingot was recovered and washed in 150 ml of distilled water for 1 hr, collected by vacuum filtration and dried. The charge was then returned to the 10 ml crucible, covered with an alumina lid, and fired at 1200°C for 1.5 hrs.

The emission spectra of the resulting phosphor is similar to that of Example 1, with the addition of a broad, weak emission peak located between 350-550 nm. The relative luminescence response of this sample is 407. X-ray powder diffraction patterns indicated the presence of a minor phase identified as Li₂HfO₃. Since Li₂HfO₃:Sn is a known X-ray phosphor (US-A-4,988,881), it could contribute to the overall luminescence response. Consequently, the sample was washed in 80 ml of 6M hydrochloric acid to remove the Li₂HfO₃ phase. No significant changes in emission spectra were observed after the acid washing. The relative luminescence response of the washed sample (relative to Example 1, which was assigned a response value of 100) is 307.

### Examples 9-14

Examples 9 through 14 were prepared as described in Example 8, with the exception that 0.1 to 5.0 mole % of tin was added as SnC₂O₄ (AESAR, reagent grade). SnC₂O₄ was added, as indicated in Table 2, and mixed with the reagents described in Ex. 8 by hand grinding in an agate mortar and pestle, and then fired and washed in an identical fashion. The emission spectra of both the unwashed and HCl-washed samples is very similar to those of Examples 2 through 7, with the peak emission of the spectrum occurring at about 410-412 nm. This again demonstrates how the ultraviolet emission of undoped HFO₂ is shifted to the blue region of the visible spectrum by the addition of tin. The use of a flux system is shown to increase the overall luminescence response beyond that observed in Examples 1-8. The relative luminescence responses for Ex. 8-14 are given in Table 2 below:

**Table 2**

| **Luminescence Response of flux prepared Hf**_{**1-x**}**Sn**_{**x**}**O₂** | | | | | |
|---|---|---|---|---|---|
| Example | x | Rel. Lum. Response | Int.I | Rel.HCl Response | HCl Int.I |
| 8(control) | 0.0000 | 407 | 404 | 307 | 393 |
| 9 | 0.0010 | 1409 | 974 | 1321 | 1084 |
| 10 | 0.0025 | 1671 | 982 | 1464 | 1124 |
| 11 | 0.0050 | 1732 | 996 | 1464 | 1081 |
| 12 | 0.0099 | 1732 | 1002 | 1554 | 1071 |
| 13 | 0.0244 | 1482 | 919 | 1536 | 1039 |
| 14 | 0.0476 | 1357 | 806 | 1536 | 921 |

The above examples demonstrate that the overall luminescence response of HfO₂ is increased by the addition of tin.

### Example 15

Example 15 demonstrates an intensifying screen comprised of tin-activated Hf0₂. A 50 gram sample of Hf₁₋ₓSnO₂ was prepared as in Ex. 12, except that the material was not washed in 6M HC1. The relative luminescence response of the resultant sample was 1714.

The phosphor was mixed with 13% Permuthane™ polyurethane solution in a methylene chloride and methanol mixture to produce a dispersion with 21 parts of phosphor and 1 part of binder by weight. The dispersion was coated on a blue tinted transparent poly(ethylene terephthalate) film support to produce a coating with about 2.8 g/dm² of the phosphor. This coating gave a relative luminescence response of 350.

The following examples demonstrate the effect of titanium on the emission of tin-activated Hf0₂.

### Example 16

The procedure for this example was identical to that of Ex. 8, with the exception that 0.0016 g of Ti0₂ was added (0.075 mole %; Aldrich, 99.99%), and the final product was not washed with HCl. The emission spectrum of this sample was characterized by a broad peak centered at 480 nm with a width at half height of 106 nm. The relative luminescence response of the sample was 2268. After a 6M HCl washing, the response increased to 2321. No changes in the emission spectrum were observed.

### Examples 17-21

The procedure in these examples was identical to that of Ex. 16, except that 0.1, 0.3, 0.5, 1.0 and 2.0 mole % of tin was added as SnC₂0₄ (AESAR, reagent grade). The relative luminescence responses and spectral characteristics are listed below in Table 3.

**Table 3**

| **Luminescence Response of flux prepared Hf**_{**0.9993-x**}**Sn**_{**x**}**Ti**_{**0.0007**}**0₂** | | | | | | | |
|---|---|---|---|---|---|---|---|
| Example | x | Peak Max | Peak Width | Rel Rsp. | Rel Int. I | Rel HCI Rsp. | Rel HCI Int.I |
| 16 (control) | 0.000 | 480 | 106 | 2268 | 2052 | 2321 | 2344 |
| 17 | 0.001 | 463 | 156 | 1875 | 1403 | 1893 | 1601 |
| 18 | 0.003 | 435 | 156 | 1732 | 1157 | 1696 | 1252 |
| 19 | 0.005 | 423 | 153 | 1714 | 1106 | 1607 | 1160 |
| 20 | 0.010 | 418 | 145 | 1661 | 1093 | 1643 | 1144 |
| 21 | 0.020 | 420 | 146 | 1607 | 1069 | 1429 | 1118 |

The shape and position of the emission spectra for both the unwashed and washed samples are very similar. The above examples demonstrate that the peak emission of titanium-activated Hf0₂, which occurs at about 480 nm, can be blue-shifted (that is, shifted to lower wavelengths) with the addition of tin. Note that the maximum shift is realized by x 0.005. Further addition of tin serves only to reduce the overall luminescence response. At an intermediate tin concentration the reduction in luminescence response is compensated by an anticipated increase in spectral match of the blue-shifted emission with film sensitivity.

### Examples 22-26

The following examples show the effect of tin on samples on Hf0₂ which contain 0.01 mole % Ti. The preparation is identical to that used to prepare Examples 16 through 21. The samples were not washed with HC1. The relative luminescence responses are given below in Table 4:

**Table 4**

| **Luminescence reponse of flux prepared Hf**_{**0.9999-x**}**Sn**_{**x**}**Ti**_{**0.0001**}**0₂** | | | | | |
|---|---|---|---|---|---|
| Example | x | Peak Max | Peak Width | Rel Rsp. | Rel Int.I |
| 22 (control) | 0.000 | 478 | 123 | 1184 | 2052 |
| 23 | 0.001 | 413 | 145 | 1339 | 1128 |
| 24 | 0.005 | 408 | 131 | 1696 | 1218 |
| 25 | 0.010 | 410 | 135 | 1696 | 1036 |
| 26 | 0.020 | 410 | 134 | 1625 | 998 |

### Examples 27-29

Examples 27 through 29 demonstrate the effect of tin on samples of Hf0₂ containing 0.03 mole % of Ti. The preparation is identical to that used to prepare Examples 16 through 21. The samples were not washed with HCl. The relative luminescence responses are given below in Table 5:

**Table 5**

| **Luminescence response of flux prepared Hf**_{**0.9997-x**}**Sn**_{**x**}**Ti**_{**0.0003**}**0₂** | | | | | |
|---|---|---|---|---|---|
| Example | x | Peak Max | Peak Width | Rel Rsp. | Rel Int.I |
| 22 (control) | 0.000 | 479 | 118 | 1875 | 1693 |
| 28 | 0.001 | 443 | 166 | 1518 | 1189 |
| 29 | 0.005 | 418 | 153 | 1643 | 1117 |

### Examples 30-35

The following examples show the effect of tin on samples of Hf0₂ which contain 0.05 mole % Ti. The preparation is identical to Ex. 16-21. The samples were not washed with HCl. The relative luminescence responses are given below in Table 6:

**Table 6**

| **Luminescence response of flux prepared Hf**_{**0.9995-x**}**Sn**_{**x**}**Ti**_{**0.0005**}**0₂** | | | | | |
|---|---|---|---|---|---|
| Example | x | Peak Max | Peak Width | Rel Rsp. | Rel Int.I |
| 30 (control) | 0.000 | 479 | 120 | 2001 | 1834 |
| 31 | 0.001 | 450 | 165 | 1661 | 1308 |
| 32 | 0.003 | 418 | 153 | 1661 | 1218 |
| 33 | 0.005 | 415 | 148 | 1571 | 995 |
| 34 | 0.010 | 418 | 150 | 1607 | 982 |
| 35 | 0.020 | 418 | 150 | 1500 | 989 |

### Examples 36-41

The following examples show the effect of tin on samples of Hf0₂ which contain 0.05 mole % of Ti. The preparation is identical to Ex. 16-21. The samples were not washed with HC1. The relative luminescence responses are given below in Table 7:

**Table 7**

| **Luminescence response of flux prepared Hf**_{**0.995-x**}**Sn**_{**x**}**Ti**_{**0.005**}**0₂** | | | | | |
|---|---|---|---|---|---|
| Example | x | Peak Max | Peak Width | Rel Rsp. | Rel Int.I |
| 36 (control) | 0.000 | 480 | 118 | 3000 | 2452 |
| 37 | 0.001 | 478 | 123 | 2571 | 2069 |
| 38 | 0.003 | 475 | 135 | 2161 | 1599 |
| 39 | 0.005 | 470 | 145 | 2089 | 1548 |
| 40 | 0.010 | 468 | 138 | 2036 | 1492 |
| 41 | 0.020 | 466 | 155 | 1821 | 1411 |

### Examples 42 and 43

The following examples show the effect of 0.5 mole % tin on samples of Hf0₂ which contain 0.0015 and 0.003 mole % Ti. The preparation is identical to Examples 16 through 21. The samples were not washed with HCl. The relative luminescence responses are given below in Table 8 along with previous examples having the same concentration of tin:

**Table 8**

| **Luminescence response of flux prepared Hf**_{**0.995-y**}**Sn**_{**0.005**}**Ti**_{**y**}**0₂** | | | | | |
|---|---|---|---|---|---|
| Example | y | Peak Max | Peak Width | Rel Rsp. | Rel Int.I |
| 10 | 0.0000 | 408 | 130 | 1671 | 982 |
| 24 | 0.0001 | 408 | 131 | 1696 | 1218 |
| 29 | 0.0003 | 418 | 153 | 1643 | 1117 |
| 33 | 0.0005 | 415 | 148 | 1571 | 995 |
| 19 | 0.0007 | 423 | 153 | 1714 | 1106 |
| 42 | 0.0015 | 435 | 164 | 1732 | 1131 |
| 43 | 0.0030 | 465 | 160 | 1982 | 1327 |
| 39 | 0.0050 | 470 | 145 | 2089 | 1548 |

The spectral shift is stronger for phosphors which have a lower concentration of titanium.

## Claims

1. A phosphor consisting essentially of oxygen and elements satisfying the relationship:
(Hf_{1-z}Zr_{z}):xSn yTi
wherein:
x is from 0.0002 to 0.05,
y is from 0 to 0.005,
z is from 1x10⁻⁵ to 0.5.

2. A phosphor as claimed in claim 1, wherein y is from 1x10⁻⁵ to 0.005.

3. A phosphor as claimed in claim 1 or 2 wherein the wavelength of the peak of the prompt luminescent emittance of said phosphor is between 410 and 475.

4. A phosphor as claimed in claim 1, 2, or 3 wherein x is in the range of from 0.0005 to 0.03.

5. A phosphor as claimed in claim 1, 2, 3 or 4 wherein y is in the range of from 1x10⁻⁵ to 0.002.

6. A phosphor as claimed in claim 1, 2, 3, 4, or 5 wherein x is in the range of from 0.0005 to 0.01.

7. A phosphor as claimed in claim 1, 2, 3, 4, 5, or 6 wherein y is in the range of from 1x10⁻⁵ to 0.001.

8. An X-ray intensifying screen comprising
a support; and
a layer comprising an organic binder that is transparent to X-radiation and to radiation emitted when the layer is excited by X-radiation and a phosphor capable of absorbing X-radiation and emitting longer wavelength electromagnetic radiation, said phosphor comprising oxygen and combined elements satisfying the relationship:
(Hf_{1-z}Zr_{z}):xSn yTi
wherein:
x is from 0.0002 to 0.05,
y is from 1x10⁻⁵ to 0.005, and
z is from 1x10⁻⁵ to 0.5;
said intensifying screen having a prompt luminescent emittance having a wavelength peak between 400 and 480 nm.

9. An X-ray intensifying screen as claimed in claim 8, wherein x is from 0.0005 to 0.03 and y is from 1x10⁻⁵ to 0.002.

10. An X-ray intensifying screen as claimed in claim 8, wherein x is from 0.0005 to 0.01 and y is from 1x10⁻⁵ to 0.001.
